# EUROPEAN PATENT SPECIFICATION

(11) **EP 3 020 269 B1**
(45) Date of publication and mention of the grant of the patent: **07.08.2019**
(21) Application number: 15192886.8
(22) Date of filing: 04.11.2015
(51) Int. Cl.: A01F 29/22, B24B 3/42

(54) **KNIFE SHARPENING APPARATUS FOR AN AGRICULTURAL MACHINE**
MESSERSCHÄRFVORRICHTUNG FÜR EINE LANDWIRTSCHAFTLICHE MASCHINE
APPAREIL D'AFFÛTAGE DE COUTEAU POUR UNE MACHINE AGRICOLE

(30) Priority: 13.11.2014 GB 201420220
(43) Date of publication of application: 18.05.2016
(73) Proprietor: AGCO International GmbH, 8212 Neuhausen am Rheinfall (CH)
(72) Inventor: Lindenmuller, Helge, 87616 Marktoberdorf (DE)
(74) Representative: AGCO Intellectual Property Department

(56) References cited:
- EP-A1- 0 242 464
- US-A- 4 495 734
- US-A- 5 172 521
- US-B1- 6 450 866

## Description

This invention relates to a sharpening or grinding apparatus for sharpening knives attached to a drum on an agricultural machine. More specifically, the invention relates to a knife sharpening device on a forage harvester having a chopping drum.

Self-propelled forage harvesters are usually provided with a rotatable cylindrical cutter drum having a plurality of knives which cut the crop as it is processed by the machine. The knives must be sharpened from time to time. How often depends on the type of crop being harvested. The knives form a substantially cylindrical shape during rotation and it is desirable to maintain this profile even after numerous sharpening operations have been performed.

It is known to provide automatic sharpening apparatus on harvesting machines which sharpen the drum as it rotates. Such apparatus is mounted above the chopper drum and comprises a grinding stone which traverses back and forth along a carriage guide (driven by a hydraulic cylinder) which is the length of the drum and which is mounted parallel to the longitudinal axis of the drum. The abrasive surface of the stone comes into contact with the knives and sharpens them as they rotate past. In doing so, the stone is also ground away and therefore needs to be repositioned so that it still comes into contact with the knives. The re-positioning of the stone is performed at one or both ends of the track by a catch means which lowers the stone by a controlled amount closer to the knives. This, however means that there is a greater abrasive effect on the knives located at one end, or both ends of the drum where the stone has been freshly adjusted.

EP0242464 discloses a sharpening apparatus in which the position of the stone is adjusted at one end of the carriage guide. This leads to the knives having a truncated cone profile.

In other machines where the stone is adjusted at both ends of the carriage guide, a barrel profile is created. Both of these knife profiles are undesirable since the crop will not be cut evenly.

Furthermore, adjusting the stone at one, or each end position has the major disadvantage that the sharpening apparatus may not reach the same end position each time, as parts of the drive system may wear, or tolerances within the apparatus may affect the end position reached.

US 5172521A discloses an arrangement in which the stone is adjusted at one end of the carriage guide but which reduces the formation of a barrel profile. An additional track is positioned parallel to the carriage guide and arranged so that it slopes downwards away from the end where the stone is adjusted. Once the stone has been freshly adjusted at one end of the track, it is then moved closer to the knives by travelling down the sloped track, so that, as the stone is worn away, it is moved closer to the knives which give the knives a uniform abrasive effect across the length of the drum. However, such an apparatus must also perform an idle return path once it reaches the end of the track. The return path has little or no abrasive effect as the stone is moved back up the sloped track to the adjustment position. This means it takes double the amount of time to sharpen the knives than other arrangements and can also lead to a non symmetrical cylinder cutting profile where one end is more pronounced than the other. The apparatus also has the major disadvantages that the stone is tipped as it is moves along the sloped track. This produces an undesirable wedge like wearing of the stone.

It is an aim of the present invention to provide an improved knife sharpening apparatus for an agricultural machine which obviates, or at least alleviates some of the problems associated with the prior art.

Accordingly there is provided a sharpening apparatus comprising the features of claim 1.

Since the track activates the adjustment means to move the stone holder, movement of the stone holder is not restricted to an end position on the track and therefore the stone holder may be moved whilst the carriage is moving along the track. This also means that the stone holder may be moved more than once during a one cycle of the carriage moving from one end of the track to another and back again.

Preferably, the adjustment means moves with the carriage.

Preferably, the apparatus further comprises a straight guidance rail and a straight guidance rod and the carriage slides between the guidance rod and the guidance rail. In this way the movement of the carriage from one end of the track to another is straight and the shape or contour of the track influences the force applied to the adjustment means to move the stone holder.

Preferably, the track comprises two linear parts oriented at different angles to each other. The two linear parts may comprise a single track part which has been bent or moulded. Alternatively, the track may comprise two separate linear parts which have been welded or otherwise connected together.

More preferably, the two track parts are connected at the centre of the length of the drum. This allows for the adjustment of the holder at the centre of the drum when passing through in both directions.

Alternatively, the two track parts are connected towards an end of the track and adjustment of the holder occurs at this point. In such an arrangement the track preferably comprises a straight central part which is connected to further parts on either side by a connecting angle and adjustment of the holder occurs at both connecting angles.

Preferably, the adjustment means is pivotably mounted on the carriage by a bracket. The bracket is preferably provided with a roller which moves along the track.

The carriage is preferably provided with a thread connection for connecting the stone holder within the carriage.

Preferably, the stone holder is provided with a teeth ring and said adjustment means comprises a first catch means which engages with the teeth ring, said teeth ring moveable in a first direction by a force exerted by the track on the first catch means.

The holding means preferably comprises a second catch means biased to engage with the teeth ring to prevent movement of the ring in a second direction. This way the stone holder is held in a fixed position when no force is exerted by the first catch means on the teeth ring in a first direction.

The first catch means preferably comprises a resilient material so that the catch is drawn aside to prevent overloading.

The invention will now be described, by way of example only, with reference to the accompanying drawings in which:
Figure 1 shows a cutter drum in accordance with the invention,
Figure 2 shows a perspective view of a sharpening apparatus in accordance with the invention,
Figures 3 is a close up perspective view of a part of the sharpening apparatus in accordance with the invention,
Figure 3b is a plan view from above of the sharpening apparatusof figure 3a,
Figure 4 is a further perspective view of the sharpening apparatus of figure 3a,
Figure 5 shows the change in distance between the surface of a sharpening stone and knives on a cutter drum as the sharpening stone moves in accordance with the invention,
Figures 6a and 6b show the change in distance between the surface of a sharpening stone and knives on the cutter drum as the sharpening stone moves in accordance with a further embodiment of the invention,
Figure 7a is a detailed view of Figure 3a, and
Figure 7b is a detailed view of Figure 3b.

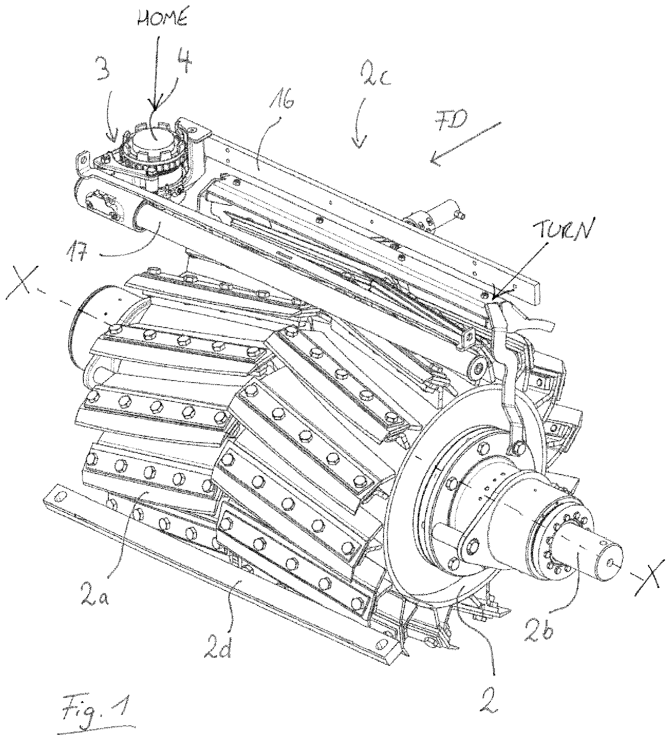

Figure 1 is a perspective view of a rotatable chopper drum 2 for an agricultural machine such as a forage harvester. The chopper drum 2 usually sits at the front of the machine between a set of compression rolls and a cracker unit, or the spout (not shown). Drum 2 rotates about its longitudinal axis X-X on shaft 2b and is provided with a plurality of knives 2a which extend across the surface of the drum. A first set of knives extend across a first half of the drum (from one end to a mid point) and a second set of knives extend from the mid point to the other end of the drum. The compression rolls compress and feed the harvested crop to the chopper drum 2 between a shear bar 2d and the knives 2a which chop the crop into fine parts and move the chopped crop to a cracker unit, or the spout. The chopper drum 2 is a cylinder and the knives 2a are dimensioned and positioned on the drum so that they form a substantially outer cylindrical profile around the drum as the drum is rotated.

Sharpening apparatus 2c is located above the drum 2 and comprises a carriage 3 for holding a sharpening stone 4, a guidance rail 16 and a guidance rod 17. Carriage 3 moves back and forth across the length of the drum between the guidance rail 16 and the guidance rod 17 carrying a sharpening stone 4 so that it is in contact with the rotating knives. When the sharpening apparatus is not in operation, the carriage 3 is stored, or parked at the ends of the rail 16 and rod 17 on the right side of the machine as viewed in the forward direction of travel, indicated by arrow FD when viewed from the rear of the machine. This position is later referred to as the HOME position as shown in figure 1. The opposite ends of the rail 16 and rod 17 on the left side of the machine where the carriage 3 turns direction so as to return to the HOME position defines a position referred to as the TURN position.

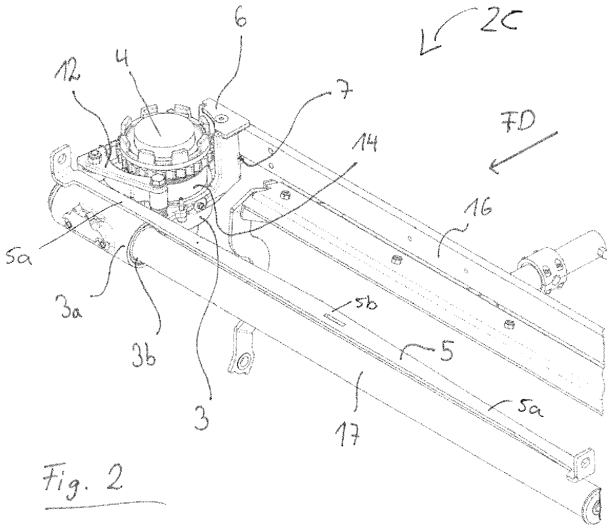

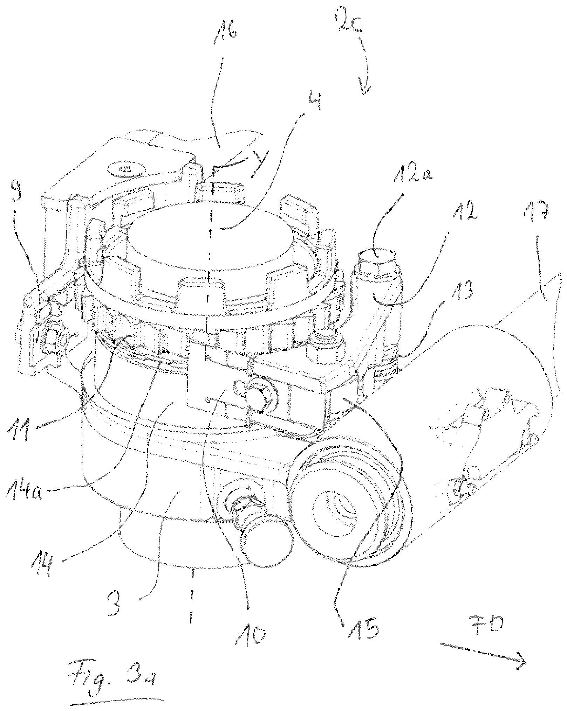

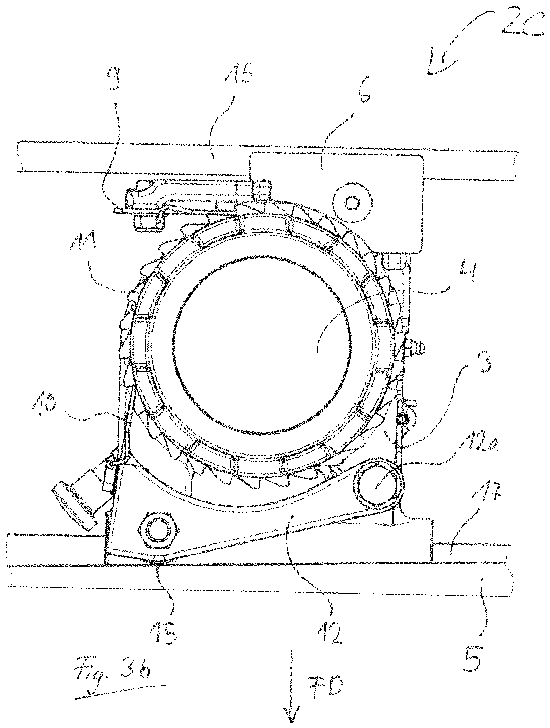

Figure 2 shows the sharpening apparatus 2c in more detail. Carriage 3 is holding a grinding stone 4, the surface of which is held in contact with the knives below (not shown) so that as it travels between the HOME and TURN positions along the guidance rail 16 and the guidance rod 17, it sharpens the knives 2a on the drum 2. The carriage 3 is now described in detail with reference to figures 2, 3a and 3b.

Carriage 3 is provided with a cylindrical stone holder 14 which is threadedly attached to the inside of the carriage 3. A cylindrical shaped stone 4 is fixedly clamped within the stone holder 14. Stone holder 14 is rotatable about its longitudinal axis Y within the threaded connection and can be lowered towards the drum 2 below by moving a teeth ring 11 located on the outside of the holder 14.

Carriage 3 is provided on one side 3b with a slider, or a ball lining 3a for sliding along guidance rod 17. On an opposing side the carriage is provided with a bracket 6 which extends over rail 16 to steady the movement of the carriage between the HOME and TURN positions and prevents the carriage falling, or twisting during operation. A roller 7 is also provided on side of the carriage which comes into contact with guide rail 16 when the stone is pushed upwards during grinding. In this way the rail 16 and rod 17 ensure that carriage 3 is kept at a fixed height above the knives during grinding. Track 5 provides a means for adjusting the position of the holder 14 and therefore also the stone 4 above the knives. Track 5 extends across the length of the drum 2a and is not straight. As shown in figure 2 it may comprise two straight portions 5a of equal length which are connected at an angle 5b. The two portions may be formed from a single piece of material which is moulded, or bent accordingly, or comprise two separate pieces which are connected at an angle by welding, for example. The track 5 may further comprise two further short sub tracks at the HOME and TURN positions which make the total length of the track longer than the length of the drum 2. In such a case, one sub track is connected to one straight portion 5a of the track and another sub track is connected to a second straight portion 5a of the track.

In an alternative arrangement, track 5 may be curved.

Preferably, the connecting angle 5b of the two straight portions 5a, or the point of inflection of the curved track 5 is cited above the mid point of the drum 2. In the figures shown, track 5 is oriented such that the two track portions 5a lie in the same horizontal plane and the carriage 3 moves in one horizontal plane between the HOME and TURN positions.

In a further alternative arrangement, the two track portions 5a may be arranged so that they lie in the same vertical plane with the connecting angle, or point of inflection forming an apex, in which case the carriage 3 would ascend from a HOME position to a mid point of the track 5 and then descend from the mid point to the TURN position of the track 5. As shown in figure 2, guidance rail 16 and guidance rod 17 are straight and thus track 5 is not parallel to either the guidance rail 16 or guidance rod 17, although as described herein, they extend across the drum 2 in approximately the same horizontal plane.

The carriage 3 is moved across the drum 2 by a conveyor chain driven by a hydraulic cylinder or an electric drive (not shown) as is known in the art.

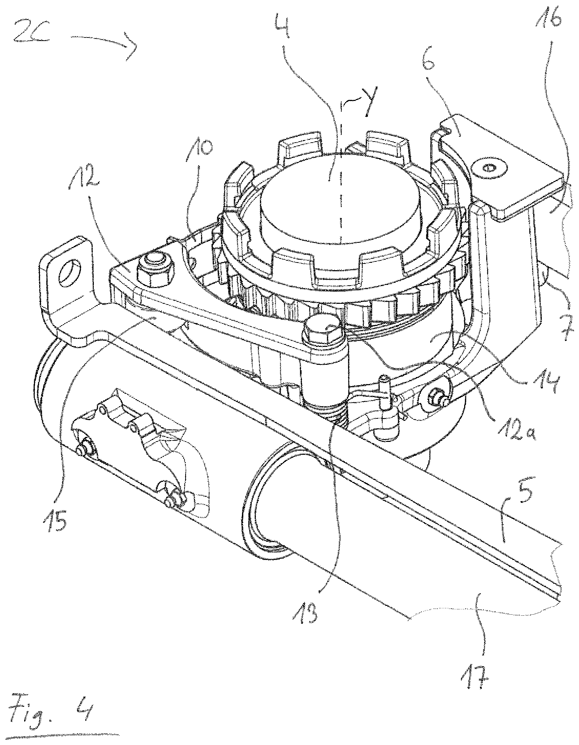

The adjustment of the stone holder 14 and stone 4 is now explained in detail with reference to figures 3a, 3b, 4, 7a and 7b:
Sharpening apparatus 2c is provided with two catch mechanisms 9, 10 to engage with teeth ring 11. Catch mechanism 9 is fixedly connected to the carriage 3. Catch mechanism 10 is connected to bracket 12 which is pivotally attached to the carriage 3 at pivot point 12a. Bracket 12 is biased anti-clockwise by spring 13 so that a pivotable roller 15 located under bracket 12 permanently contacts track 5. As the carriage 3 is moved between a HOME or TURN position to the connecting angle, or mid point of the track 5 , the track 5 continuously acts via roller 15 on bracket 12 which causes catch mechanism 10 to pivot in a clockwise direction about pivot point 12a and exert a force on the teeth ring 11 in a clockwise direction. All the while the catch mechanism 10 acts on the ring 11, the stone holder 14 is lowered so as to move stone 4 positioned in the holder closer to the knives 2a. During movement along a part of track 5, catch mechanism 10 moves over the teeth ring 11. At the angled connection 5b, where the deflection of bracket 12 is the greatest, the holding means, catch mechanism 9 is biased to engage with the teeth ring 11 and prevent movement of the ring 11 in an anti-clockwise direction and thus holds the holder 14 and any stone 4 in a fixed position. As the carriage 3 is moved further from the connecting angle 5b of the track 5 to the other end of the track, the bracket 12 is biased anti-clockwise by spring 13 so that roller 15 still follows track 5 but catch mechanism 10 just travels over teeth ring 11 without exerting any pivoting force on it. Upon reaching the other end of the track 5, or the RETURN positon, the carriage 3 is then moved back to the mid point of the track 5 and the catch mechanism 10 starts exerting a continuous force on the teeth ring 11 again which lowers the holder 14 and a stone 4 closer to the knives 2a until the connecting angle 5b of track 5 is reached whereupon the holding means, catch mechanism 9 moves over a tooth into the next gap of the teeth ring 11. Further movement from the connecting angle 5b to the HOME position releases the catch mechanism 10 and the holder 14 and stone 4 is held in a fixed position by catch mechanism 9.

It can be seen that when moving from the starting position, or HOME position to the mid point of track 5, the stone holder 14 is continuously lowered across the first half of the drum 2. It is then held in place while it is moved across the second half of the drum 2 to the TURN position. On its return journey from the TURN position back to the HOME position, the stone holder 14 is continuously lowered across the second half of the drum until the mid point. It is then held in place for movement back across the first half of the drum 2.

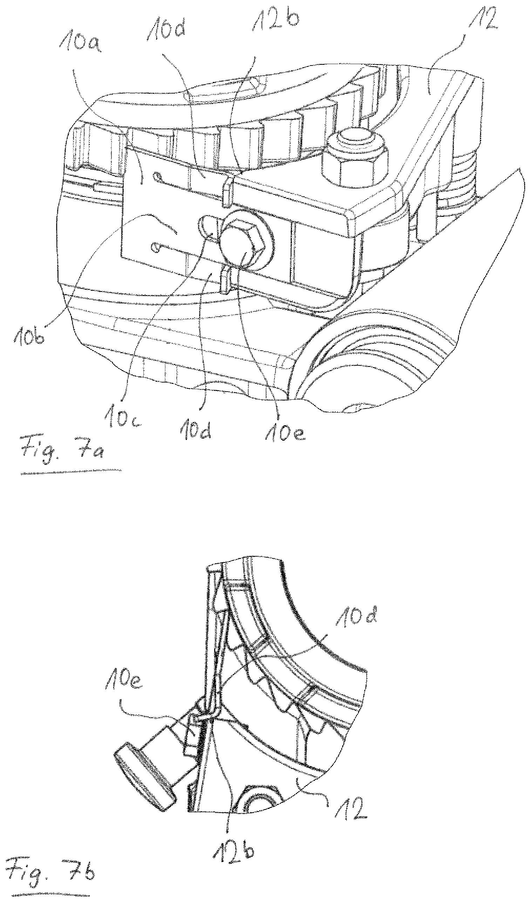

First and second catch mechanisms 10, 9 respectively, especially first catch mechanism 10 can easily be drawn aside to avoid damage. With reference to Figures 7a and 7b, the first catch mechanism 10 is described in detail.

First catch mechanism 10 comprises catch member 10a which is made from an elastics material such as spring steel. Catch member 10a comprises a main body 10b having a slot 10c and two legs 10d being of a generally L shape. Slot 10 c is used to attach the catch mechanism 10 to bracket 12 by screw 10e. Legs 10d engage with a shoulder 12b of bracket 12. When the movement of teeth ring 11 is blocked, movement of bracket 12 towards teeth ring 11 causes catch member 10a to be bent so that the legs 10d glide off shoulder 12b. Thereby, catch member 10a can move relative to screw 10e (and bracket 12) along slot 10c. In this way the forces exerted on the catch mechanism 10 are kept to a minimum enabling the catch mechanism 10 to be reused and be protected against damage and inoperability.

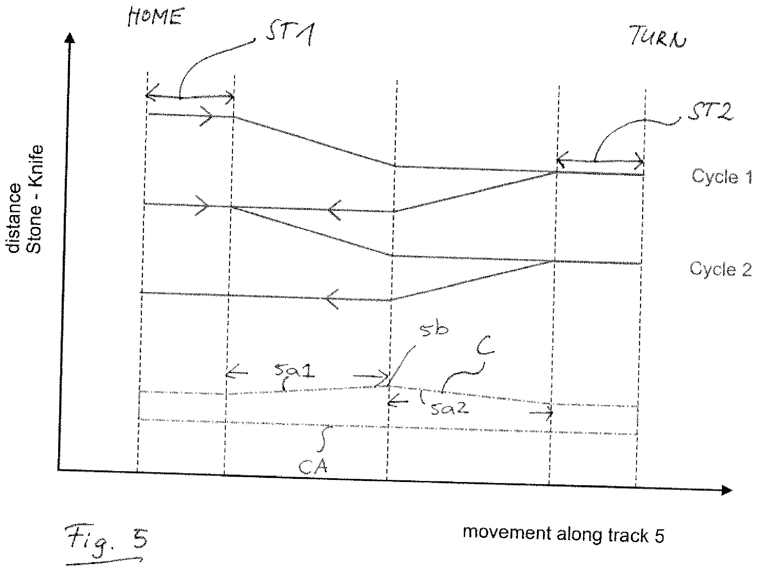

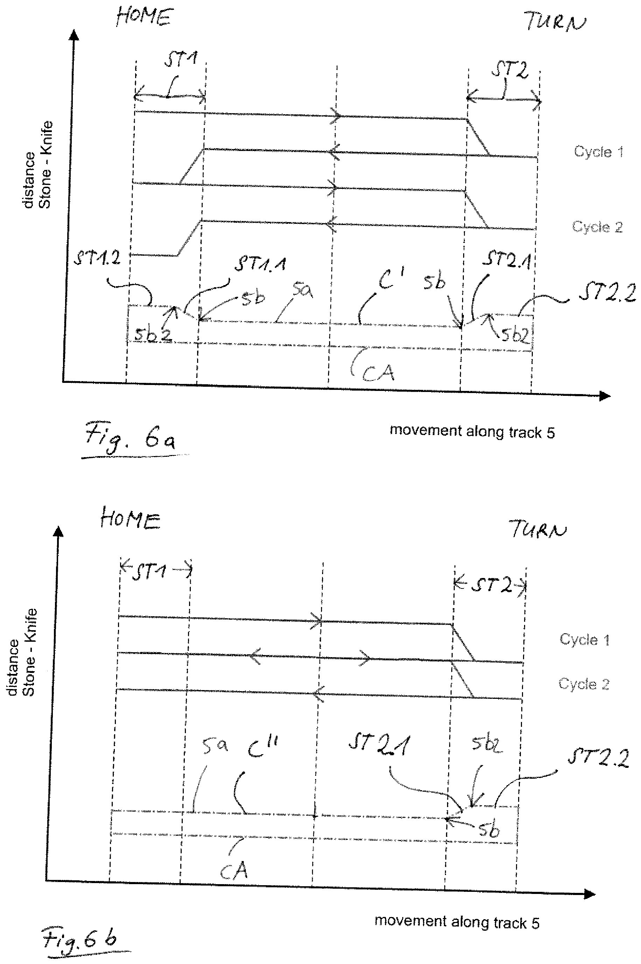

Figure 5 shows the change in distance between the abrasive surface of the stone 4 and the knives 2a as the carriage 3 moves back and forth along track 5 for two consecutive cycles. A cycle is defined as movement from the HOME position to the TURN position and back to the HOME position. Broken line C shows the contour of track 5 which engages with bracket 12 and thus shows the relationship of the contour of track 5 with the movement of stone 4. Broken line CA is reference line representing rod 17 and highlights the contour of track 5 with respect to a straight line. The same line CA is also shown in figures 6a and 6b. In a first cycle, cycle 1, the stone 4 moves a small distance from a HOME position located on a first sub track ST1 to the end of sub track ST1. (Sub tracks ST1 and ST2 in this case are short straight tracks, parallel to rod 17 attached to each straight portion 5a of track 5 and which extend the whole track 5 so that it is longer than the length of drum 2). The carriage 3 then moves along the first straight portion 5a1 of track 5 to the mid point, or connecting angle 5b and in doing so, the track 5 exerts a continuous force on the catch mechanism 10 which moves the teeth ring 11 and thus the stone holder 14. A stone positioned in the holder will thus be lowered towards the knives 2a. At the mid point/connecting angle 5b, the holding means, catch mechanism 9 moves onto the next tooth. The carriage then continues from the mid point/connecting angle 5b towards the TURN position at the other end of the track 5 along the second straight portion 5a2 of track 5 and in doing so, holding means, catch mechanism 9 holds the stone in a constant fixed position while catch mechanism 10 returns to the initial position. As a result, the distance between the abrasive surface of the stone 4 and the knives 2a is kept constant until the end of the second track portion 5a is reached. The carriage 3 then moves onto a second sub track ST2 to the TURN position. When the carriage is then moved back in the direction towards the HOME position, the second track portion 5a2 exerts a continuous force on the catch mechanism 10 which moves the teeth ring 11 and thus the stone holder 14 until the mid point/connecting angle 5a is reached again. From the mid point back along the first straight portion 5a1, catch mechanism 9 holds the holder 14 and therefore stone 4 in a fixed position above the knives. As a result, the distance between the abrasive surface of the stone 4 and the knives 2a is kept constant until the end of first straight track portion 5a1 is reached. The carriage 3 then moves onto the first sub track ST1 and is ready to repeat a second cycle, cycle 2.

The invention avoids any tilting of the stone and thus the abrasive surface of the stone is kept even.

In accordance with an alternative arrangement of the invention, the connecting angle 5b in the track 5 is not cited at the mid point of the track 5. Instead, as shown in figure 6b, track 5 has a contour as shown by broken line C" in which a connecting angle 5b is cited connecting a straight track portion 5a to sub track ST2 close to the TURN position. This has the effect of lowering the stone holder 14 and stone 4 over a short distance of travel when the carriage moves onto sub track ST2.

Sub track ST2 in this arrangement is not straight and comprises two straight sub track portions ST2.1 and ST2.2 connected by a second connecting angle 5b2. When the carriage 3 moves onto sub track ST2 at connecting angle 5b, track 5 exerts a force on the catch mechanism 10 to move the teeth ring 11 and thus the stone holder 14 including stone 4 until the catch mechanism 9 moves onto the next tooth. After passing the connecting angle 5b, the carriage moves towards second connecting angle 5b2 in the sub track ST2. This second connecting angle does not cause any movement of the stone holder 14 since catch mechanism 9 holds the stone holder in position and catch mechanism 9 is not moved by track 5. With the arrangement described in figure 6b, the stone 4 is lowered once per cycle, that is, it is lowered close to either the HOME or TURN positions, depending on where the connecting angle is placed.

In yet a further alternative arrangement of the invention, as shown in figure 6a track 5 has a contour C' comprising two connecting angles 5b located close to each end of track 5. Each connecting angle 5b connects straight portion 5a to sub tracks ST1 and ST2. Each connecting angle 5b connects straight track portion 5a to a straight sub track portions ST1.1 and ST2.1 of each sub track ST1 and ST2 respectively. Each sub track also comprises a second connecting angle 5b2 connecting straight portions ST1.1 and ST2.1 of each sub track to further sub track straight portions ST1.2 and ST2.2 respectively. When the carriage 3 moves onto sub track ST1 or ST2, track 5 exerts a force on the catch mechanism 10 to move the teeth ring 11 and thus the stone holder 14 including stone 4 until the catch mechanism 9 moves onto the next tooth. After passing the connecting angle 5b between the track portions 5a and sub track portion ST1.1 or ST2.1, the carriage moves towards the second connecting angle 5b2 on the sub track.

Second connecting angle 5b2 does not cause any movement of the stone holder 14 since catch mechanism 9 holds the stone holder 14 in position and catch mechanism 10 is not moved by track 5. If the sub track was to extend over a longer distance, adjustments of the stone 4 will still occur even if the end positions on the track, or the HOME and TURN positions are not reached every time. With this arrangement, stone holder 14 and stone 4 are lowered twice per cycle, that is, the stone holder is lowered at both the HOME and TURN positions.

Unlike the prior art, the mechanism to adjust the stone holder 14 moves with the carriage 3 and not by other mechanisms cited at the end positions of the track.

With all the arrangements described, the adjustment of the stone 4 still occurs even if the end positions on the track, or the HOME and TURN positions are not reached each time. This may occur, for example, if there is lengthening of the conveyor chain at each end of the track.

Stone holder 14 is provided with a stop 14a (in the form of a circlip) which comes into contact with carriage 3 to prevent the stone holder 14 coming into contact with the knives 2a when the stone is worn down.

## Claims

1. Sharpening apparatus (2c) for sharpening a plurality of knives (2a) rotating on a chopping drum (2), said apparatus comprising a carriage (3) having a stone holder (14) for holding a sharpening stone (4), said carriage (3) provided with adjustment means (9, 10, 11) for moving the stone holder (14) closer to the knives (2a) and holding means for holding the stone holder (14) in a fixed position and a fixed track (5) extending across the length of the drum along which said carriage moves, **characterised in that** said track (5) is not straight and the track (5) activates the adjustment means to move the stone holder (14) closer to the knives (2a) when the carriage (3) moves along the track (5) in one direction.

2. Sharpening apparatus (2c) as claimed in claim 1 wherein the adjustment means (9, 10, 11) moves with the carriage (3).

3. Sharpening apparatus (2c) as claimed in claim 1 or claim 2 wherein the apparatus further comprises a straight guidance rail (16) and a guidance rod (17) and the carriage (3) slides between the guidance rod (17) and the guidance rail (16)

4. Sharpening apparatus (2c) as claimed in any preceding claim wherein the track (5) comprises two linear parts (5a) oriented at different angles to each other.

5. Sharpening apparatus (2c) as claimed in claim 4 wherein two linear track parts (5a) are connected towards an end of the track (5) and adjustment of the holder (14) occurs at this point.

6. Sharpening apparatus (2c) as claimed in any of claims 1 to 3 wherein the track (5) comprises a straight central part (5a) connected to further parts (ST1, ST2) on either side by an angle (5b) and adjustment of the holder (14) occurs at both these points.

7. Sharpening apparatus (2c) as claimed any preceding claim wherein the adjustment means is pivotably mounted on the carriage (3) by a bracket (12).

8. Sharpening apparatus (2c) as claimed in claim 7 wherein the bracket (12) is provided with a roller (15) which moves along the track (5).

9. Sharpening apparatus (2c) as claimed in any preceding claim wherein the carriage (3) is provided with a thread connection for connecting the stone holder (14) within the carriage (3)

10. Sharpening apparatus (2c) as claimed in any preceding claim wherein the stone holder (14) is provided with a teeth ring and said adjustment means comprises a first catch means (10) which engages with the teeth ring (11) said teeth ring (11) moveable in a first direction by a force exerted by the track (5) on the catch means (10).

11. Sharpening apparatus (2c) as claimed in claim 10 wherein the holding means comprises a second catch means (9) biased to engage with the teeth ring (11) to prevent movement of the teeth ring (11) in a second direction.

12. Sharpening apparatus as claimed in claim 11 wherein the first catch means (10) comprises a resilient material and is drawn aside to prevent overloading.

## Patentansprüche

1. Schärfvorrichtung (2c) zum Schärfen einer Mehrzahl von Messern (2a), die mit einer Häckslertrommel (2) rotieren, wobei die Vorrichtung eine Aufnahme (3) mit einem Steinhalter (14) zum Aufnehmen eines Schleifsteins (4) aufweist, wobei die Aufnahme (3) mit Einstellmitteln (9, 10, 11) zum Bewegen des Steinhalters (14) näher zu den Messern (2a) und mit Haltemitteln zum Halten des Steinhalters (14) in einer festen Position und einer festen Spur (5) versehen ist, die sich über die Länge der Trommel erstreckt, entlang derer sich die Aufnahme bewegt, **dadurch gekennzeichnet, dass**
die Spur (5) nicht gerade ist und die Spur (5) die Einstellmittel zum Bewegen des Steinhalters (14) näher zu den Messern (2a) aktiviert, wenn sich die Aufnahme (3) entlang der Spur (5) in einer Richtung bewegt.

2. Schärfvorrichtung (2c) nach Anspruch 1, wobei sich das Einstellmittel (9, 10, 11) mit der Aufnahme (3) bewegt.

3. Schärfvorrichtung (2c) nach Anspruch 1 oder Anspruch 2, wobei die Vorrichtung weiterhin eine gerade Führungsschiene (16) und eine geraden Führungsstange (17) aufweist und die Aufnahme (3) zwischen der Führungsstange (17) und der Führungsschiene (16) gleitet.

4. Schärfvorrichtung (2c) nach mindestens einem der vorhergehenden Ansprüche, wobei die Spur (5) zwei Linearteile (5a) aufweist, die unter verschiedenen Winkeln zueinander ausgerichtet sind.

5. Schärfvorrichtung (2c) nach Anspruch 4, wobei die zwei Linearteile (5a) in Richtung eines Endes der Spur (5) verbunden sind und die Einstellung des Halters (14) an dieser Stelle geschieht.

6. Schärfvorrichtung (2c) nach mindestens einem der Ansprüche 1 bis 3, wobei die Spur (5) einen geraden Mittelteil (5a) aufweist, der mit weiteren Teilen (ST1, ST2) an jeder Seite über einen Winkel (5b) verbunden ist und die Einstellung des Halters (14) an diesen beiden Stellen geschieht.

7. Schärfvorrichtung (2c) nach mindestens einem der vorhergehenden Ansprüche, wobei das Einstellmittel mittels eines Bügels (12) drehbar an der Aufnahme (3) montiert ist.

8. Schärfvorrichtung (2c) nach Anspruch 7, wobei der Bügel (12) mit einer Rolle (15) versehen ist, die sich entlang der Spur (5) bewegt.

9. Schärfvorrichtung (2c) nach mindestens einem der vorhergehenden Ansprüche, wobei die Aufnahme (3) mit einer Gewindeverbindung zum Verbinden des Steinhalters (14) in der Aufnahme (3) versehen ist.

10. Schärfvorrichtung (2c) nach mindestens einem der vorhergehenden Ansprüche, wobei der Steinhalter (14) mit einem Zahnring versehen ist und das Einstellmittel ein erstes Rastmittel (10) aufweist, welches in den Zahnring (11) eingreift, wobei der Zahnring (11) aufgrund einer von der Spur (5) auf das Rastmittel (10) ausgeübten Kraft in einer ersten Richtung beweglich ist.

11. Schärfvorrichtung (2c) nach Anspruch 10, wobei das Haltemittel ein zweites Rastmittel (9) aufweist, das in Richtung eines Eingreifens in den Zahnring (11) beaufschlagt ist, um eine Bewegung des Zahnrings in einer zweiten Richtung zu verhindern.

12. Schärfvorrichtung nach Anspruch 11, wobei das erste Rastmittel (10) ein elastisches Material aufweist und zur Seite gezogen wird, um eine Überlastung zu verhindern.

## Revendications

1. Dispositif d'affûtage (2c) destiné à affûter une pluralité de couteaux (2a) tournant sur un tambour de hachage (2) ledit dispositif comprenant un chariot (3) comportant un support de pierre (14) destiné à supporter une pierre d'affûtage (4),
ledit chariot (3) comportant un moyen de réglage (9, 10, 11) destiné à déplacer le support de pierre (14) au plus près des couteaux (2a) et
un moyen de maintien destiné à maintenir le support de pierre (14) dans une position fixe et une piste fixe (5) s'étendant à travers la longueur du tambour le long duquel ledit chariot se déplace,
**caractérisé en ce que** ladite piste (5) n'est pas rectiligne et la piste (5) active le moyen de réglage de manière à déplacer le support de pierre (14) au plus près des couteaux (2a) lorsque le chariot (3) se déplace le long de la piste (5) dans une première direction.

2. Dispositif d'affûtage (2c) selon la revendication 1, dans lequel le moyen de réglage (9, 10, 11) se déplace avec le chariot (3).

3. Dispositif d'affûtage (2c) selon la revendication 1 ou 2, dans lequel le dispositif comprend, en outre, un rail de guidage (16) rectiligne et une tige de guidage (17) et le chariot (3) glisse entre la tige de guidage (17) et le rail de guidage (16).

4. Dispositif d'affûtage (2c) selon l'une quelconque des revendications précédentes, dans lequel la piste (5) comprend deux parties linéaires (5a) orientées sous différents angles l'une par rapport à l'autre.

5. Dispositif d'affûtage (2c) selon la revendication 4, dans lequel deux parties de piste linéaires (5a) sont reliées vers une extrémité de la piste (5) et le réglage du support (14) est assuré au niveau de ce point.

6. Dispositif d'affûtage (2c) selon l'une quelconque des revendications 1 à 3, dans lequel la piste (5) comprend une partie centrale rectiligne (5a) reliée à d'autres parties (ST1, ST2) de chaque côté sous un angle (5b) et le réglage du support (14) est assuré au niveau de ces deux points.

7. Dispositif d'affûtage (2c) selon l'une quelconque des revendications précédentes, dans lequel le moyen de réglage est monté de manière à pouvoir pivoter sur le chariot (3) au moyen d'une potence (12).

8. Dispositif d'affûtage (2c) selon la revendication 7, dans lequel la potence (12) comporte un rouleau (15) qui se déplace le long de la piste (5).

9. Dispositif d'affûtage (2c) selon l'une quelconque des revendications précédentes dans lequel le chariot (3) comporte une liaison par fil afin de relier le support de pierre (14) à l'intérieur du chariot (3).

10. Dispositif d'affûtage (2c) selon l'une quelconque des revendications précédentes, dans lequel le support de pierre (14) comporte une couronne dentée et ledit moyen de réglage comprend un premier moyen de saisie (10) qui engrène avec la couronne dentée (11), ladite couronne dentée (11) pouvant être déplacée dans une première direction par un effort exercé par la piste (5) sur le moyen de saisie (10).

11. Dispositif d'affûtage (2c) selon la revendication 10, dans lequel le moyen de maintien comprend un second moyen de saisie (9) préchargé de manière à engrener sur la couronne dentée (11) afin d'empêcher le mouvement de la couronne dentée (11) dans une seconde direction.

12. Dispositif d'affûtage selon la revendication 11, dans lequel le premier moyen de saisie (10) comprend un matériau élastique et est entraîné à l'écart afin d'empêcher une surcharge.
